# EUROPEAN PATENT APPLICATION

(11) **EP 4 467 000 A1**
(43) Date of publication of application: **27.11.2024**
(21) Application number: 23174729.6
(22) Date of filing: 23.05.2023
(51) Int. Cl.: A21D 13/36, A21D 13/47, A23G 3/34

(54) **A METHOD TO PROVIDE AT LEAST ONE MARK TO A FILLED WAFER COMPRISING AN UNLEAVENED FOOD SHEET CASING**

(71) Applicant: Astra Sweets, 2300 Turnhout (BE)
(72) Inventor: Baeyens, Chris, 2460 Kasterlee (BE)
(74) Representative: IP HILLS NV

(57) **Abstract**

A method to provide at least one mark to a filled wafer comprising an unleavened food sheet casing is provided, the casing is provided from at least one unleavened food sheet. The casing encapsulates a filling. The method comprises using a pulsed laser for laser etching of at least one mark in at least one of said at least one unleavened food sheet.

## Description

### Field of the Invention

The present invention generally relates to filled wafers comprising an unleavened food sheet casing, such as a sherbet filled wafer, e.g. a so-called flying saucer.

### Background of the Invention

Filled wafers comprising an unleavened food sheet casing, such as a sherbet filled wafer, e.g. a so-called flying saucer are well known. Though several shapes have been tried in the market, only the two disk shaped unleavened food sheet having a substantially flat rim encompassing a spherical cap shaped concavity, the substantially flat rims being sealed one to the other, and the void space between the sheets being partially filled with sherbet have stood the test of time.

Various modifications in colour of the unleavened food sheets, and modifications to the taste of the filling, have been commercialised. However basically the outlook of the 'flying saucer' has not been changed since the early days back in the 50s of the twentieth century. A method to provide such flying saucers is described in BE1021600B1.

Nowadays, customers become more demanding as to appearance, origin and content of products, as well as information on the product provided, also in confectionary. Also the demand for individualised or "specially made" products increase, and products need to meet higher demands on safety, healthiness, ingredients and the presence of or containing substances that are a by-product of the production of the product.

It is known to use a laser to engrave a mark in a food product. As an example, EP3160250 disclose the use of a laser to decorate wafers made from a batter comprising flour, sugar, oil or fat, and water. The laser used is focussed above or under the surface of the wafer to be engraved.

However this laser, as well as other conventionally used lasers, tend to burn wafer when used to mark the unleavened food sheet, or even may set the unleavened food sheet on fire.

### Summary of the Invention

It is hence an object of the present invention to provide a method to provide at least one mark to a filled wafer comprising an unleavened food sheet casing. The one or more marks may be either informative on the content, production method or production date, composition or content, decorative or even may individualise the filled wafer. The method itself however cause little to no risk to modify the composition or content of the filled wafer, not should cause using additional products which itself may be questioned as to its content or composition.

According to a first aspect of the present invention, a method to provide at least one mark to a filled wafer comprising an unleavened food sheet casing is provided. The casing is provided from at least one unleavened food sheet, and the casing encapsulating a filling. The method comprises using a pulsed laser for laser etching of at least one mark in at least one of said at least one unleavened food sheet.

According to the first aspect of the invention, at least one mark, also referred to "sign", is lasered in the unleavened food sheet, preferably using a pulsed laser.

Unleavened food sheet, i.e. unrisen food sheet, also known as "eatable paper" is known in the art. The unleavened food sheet is free of leaven, hence made without leaven such as yeast or baking powder. It is a thin sheet of baked dough, comprising water, starch and optionally colorants and other additives, like viscosity modifiers. It is typically sugarless. The thickness of the unleavened food sheet may range from 0.25mm to 2.5 mm, preferably from 0.5mm to 2 mm, most preferably from 0.9mm to 1.1mm, e.g. 1mm. The unleavened food sheet is also referred to as "wafer", the eatable paper used a bread in the Christian ritual of the Eucharist, i.e. the sacramental bread, or host. Immediately after baking, this baked unleavened food sheet is non-elastic and fragile, as it is almost completely composed of starch only. These wafers may not be confused with wafers being made from starch and sugar and a raising agent, and which may be referred to as waffles. Such baked batter or dough provides an elastic, ductile baked product immediately after baking and shows a totally different behaviour.

A typical filled wafer is better known as a "flying saucer", where the casing is partially filled with sherbet filling.

According to some embodiments, the thickness of the unleavened food sheet may range from 0.25mm to 2.5 mm.

Typically, the starch, or flour, used is starch from rice, wheat, corn, potatoes or a combination of those, although starch from other sources may be used as well, optionally in combination with starch or flour, originating from rice, wheat, corn, potatoes or a combination of those.

Using a pulsed laser has the advantage that the surface of the unleavened food sheet is avoids to a large extent burning the unleavened food sheet, hence avoiding the potential risk of creating acrylamide, as may be the casing when uncarefully conditioning the lasering when using the usual lasers, even when they are used with a focal point offset the surface to be lasered, e.g. focused above or beyond the surface to be lasered.

According to some embodiments, the method may comprise tuning the humidity of said unleavened food sheet to a level of more than or equal to 1%w, prior to laser etching of said mark in said unleavened food sheet.

When the unleavened food sheets is not comprise sufficient humidity when lasering , the lasering of the unleavened food sheet may work less well, as the risk of providing burnt zones on the unleavened food sheet, hence potentially creating acrylamide, or even inflammation of the unleavened food sheet increases. It was found that the unleavened food sheet having a humidity (i.e. its content of water expressed in weight of the water over the total weight of the product measured) equal to or above 5%w, even preferably equal to or above 8%w, even more than or equal to 10%w, further avoid to a large extent, even completely, burning or inflammation of the unleavened food sheet. This is in particularly true when a pulsed laser is used to etch the surface of the unleavened food sheet.

According to some embodiments, the method may comprise tuning the temperature of said unleavened food sheet to a level of less than or equal to 100°C, prior to laser etching of said mark in said unleavened food sheet.

When the temperature of the unleavened food sheets is too high, the lasering of the unleavened food sheet may locally increase the temperature of the unleavened food sheet to a level where inflammation may occur, or where acrylamides may be created.

More preferred, the temperature of said unleavened food sheet is reduced to less than or equal to 85°C, even less than or equal to 50°C, such as in the range of ambient temperature to 30°C, prior to laser etching.

Hence, when the unleavened food sheet is laser etched directly after baking, the unleavened food sheet is to be allowed to cool prior to laser etching, as the unleavened food sheet is baked at higher temperatures. The cooling may be done by leaving the unleavened food sheet sufficiently long exposed to ambient, or a forced cooling may be used.

When the unleavened food sheet is laser etched at another position in the production process, also then the unleavened food sheet is to be allowed to cool if necessary, either by leaving the unleavened food sheet sufficiently long exposed to ambient, or by applying forced cooling.

More preferred, the temperature of said unleavened food sheet is reduced and the humidity of said unleavened food sheet is conditioned to or increased, prior to laser etching of said mark in said unleavened food sheet. Most preferably, the temperature of said unleavened food sheet is brought to a level of less than or equal to 100 °C and the humidity of said unleavened food sheet to a level of more than or equal to 2%w, prior to laser etching of said mark in said unleavened food sheet.

The mark may be a letter, word, figure, code, logo, drawing, etc. Any sign may do.

Possibly the mark may be provided at the inner side of the unleavened food sheet, at both inner and outer side of the unleavened food sheet, or at the outer surface of the unleavened food sheet when the unleavened food sheet is used for providing the casing of the filled wafer. The laser, preferably being a pulsed laser, will provide, i.e. engrave the mark from the side the laser is positioned in view of the unleavened food sheet. Hence when one or more marks are etched on both sides, the unleavened food sheet is lasered one from each of its sides.

According to some embodiments, the mark may be provided to the outer side of the at least one unleavened food sheet.

The casing of the filled wafer may comprise more than one unleavened food sheets, e.g. 2, 3, 4 or even more. However preferably the casing of the filled wafer is provided by two unleavened food sheets.

According to some embodiments, the filled wafer may comprise two unleavened food sheets, each providing a part of the casing, said two unleavened food sheets being connected one to the other thereby closing the casing, said at least one mark is provided to at least one of the two unleavened food sheets prior to connected the two unleavened food sheets to each other.

Unleavened food sheets may be glued one to the other by a n eatable glue, however unleavened food sheets typically have the tendency to adhere one to the other when water is applied to the side of the unleavened food sheet to stick to another unleavened food sheet, though it may be sufficient wetting one of the sides of the sheets to be brought in contact with each other, also both sides of the sheets to be brought in contact with each other may be wetted. Once the wetted sides are in contact, a pressure may be applied to the contacting surfaces to increase the adherence.

According to some embodiments, both unleavened food sheets may be provided with a mark by laser etching.

According to some embodiments, the filling may be sherbet filling.

According to some embodiments, each of said two unleavened food sheets may have a substantially flat rim, encompassing a spherical cap shaped concavity, said substantially flat rims being connected one to the other thereby closing the casing.

According to some embodiments, the step of connecting of the two unleavened food sheets may comprise wetting at least one of said substantially flat rim with water, and contacting, optionally pressing the two substantially flat rims to each other.

Hence the filled wafer may be a "flying saucer" having at least one mark engraved or etched to one of its outer surfaces or sides, and possibly to both its outer surfaces or sides.

The advantage of the lasering of a mark on the unleavened food sheet or sheets of the filled wafer, is that the use of colorants or inks can be avoided to provide a mark. Inks and colorants usually have less resistance to degradation, as the colour may fade over time. Also the chemicals used to provide the inks or dyes are cumbersome as to food health and safety is concerned.

Turning to a method to provide an unleavened food sheet, such sheet is provided by baking a batter made from starch, usually corn or rice starch, water, some oil and colorants. The oil obviously is to be food grade oil, like maize oil, sunflower oil, rapeseed oil and alike. The content of starch or flour in the batter is preferably in the range of 50 kg to 80 kg per 100l water. The content of oil in the batter is preferably in the range of 0.05 kg to 1.5 kg per 100 litre water. In case colorants or aroma is present, such colorants and/or aroma together does not go beyond 1kg per 100 litre water of the batter, and is usually in the range of 0.0005 kg to 1 kg for 100 litre water. The content of other additives, like viscosity modifiers and alike, in the batter is preferably in the range of 0 to 5 kg per 100 litre water. The batter is preferably sugar-free.

The batter is provided to a baking plate as a thin layer, which is thereafter heated to a temperature in the range of 100°C to 250°C over a short period of time, most preferably in the range of 125°C to 150°C, during a period of 0.5 to 1.5 minutes. The water, which may provide up to 2/3 of the batter, will evaporate, leaving a hot, thin and brittle baked unleavened food sheet. To provide a shaped sheet, instead of a flat sheet, the batter is provided on a first of a baking tray comprising either one or a plurality of protrusions (providing the male baking tray) or one or a plurality of recesses (providing the female baking tray). The recess or recesses and protrusion or protrusions are well positioned, such that the batter can be provided as a relatively thin layer between two baking trays, being a male and a female baking tray, which are positioned with the protrusions extending in the recesses, but leaving a narrow space filled with batter. After baking the batter, a profiled but brittle baked unleavened food sheet is provided having a flat sheet with indentations where the protrusions and recesses were present during baking.

This baked unleavened food sheet cools down very rapidly seen the little heat content in the sheet. However, the cooled baked unleavened food sheet still comprises little to no humidity, making it amongst others difficult to handle, may cause the sheet to curl, and may provide sheets for which the dimensions (length and width) may vary one from the other. By exposing the baked unleavened food sheet to an environment with controlled humidity and temperature over a period of time, the baked unleavened food sheet may stabilise in shape and dimension, and may become less brittle.

It was found that preferably the water content or humidity of the baked unleavened food sheet is brought to a level above 1%w, even above 2%w, or even above higher threshold values, and/or the temperature of the baked unleavened food sheet is brought to a level less than or equal to 100°C or cooler prior to laser etching of said mark in said unleavened food sheet, in order to further reduce the risk on burning or inflammation of the unleavened food sheet during lasering with a pulsed laser.

Such water content or humidity may be obtained by subjecting the baked unleavened food sheet to a steam treatment, using saturated steam for a relative short period of time. Alternatively, this water content or humidity may be obtained by keeping the baked unleavened food sheet in an environment with a higher relative humidity, e.g. in the range of 70 to 90%RH and a temperature of 15°C to 50°C for at least 30 minutes, e.g. a time period between 30 minutes and 60 minutes. According to another alternative, this water content or humidity may be obtained by keeping the baked unleavened food sheet in an environment with controlled temperature of 15°C to 40°C, such as in the range of 15°C to 28°C, e.g. about ambient temperature, and a lower relative humidity, like a relative humidity of 55 to 75%RH, also for a period of more than 30 minutes, e.g. 2h, 5h, 12h, 24h or even up to some days, like 48h, 60h or even 72h. Optionally a steaming step, and any of such conditioning steps using said higher or said lower relative humidity, or a sequence of conditioning steps, the first step using first said higher and thereafter the second step using said lower relative humidity may be applied.

Most preferably, both sides of the unleavened food sheets are exposed to this environment simultaneously, and if two or more conditioning steps are used, at least during the first conditioning step.

After baking this unleavened food sheet, and optionally after conditioning of the baked unleavened food sheet, the cases are made. This may be done by shaping the unleavened food sheet or sheets, and connecting surfaces of the sheet to each other. This connection may be achieved by making a surface which is to stick to another surface, wet, and thereafter contacting, optionally pressing this wettened surface to a surface of the sheet to be adhered to. As such complex cases may be made. During the coarse of shaping the case, a filling may be provided in the open case, which is thereafter closed by a piece of unleavened food sheet.

When a shaped sheet is used, the indentation or indentations may be filled with the filling. They may be filled completely or only partially. Once filled, a second unleavened food sheet may be used to close the indentations. As an example, a flat unleavened food sheet may be adhered to the side of the shaped sheet where the concavity of the indentations is present. As such a case is made having one non-flat sides, the void between the indentation of the non-flat side and the flat side being partially or completely filled with filling.

Alternatively, the indentations in a sheet are filled with a filling, after which a second shaped sheet is used to close the indentations. As an example, a second unleavened food sheet may be adhered to the side of the shaped sheet where the concavity of the indentations is present, this second unleavened food sheet having its side where the concavity of the indentations is present directed to the side of the first unleavened food sheet where the concavity of the indentations is present. As such a case is made having two non-flat sides, the void between the indentations being maximally half filled with filling. The indentation may have the form of a cylindrical cap, surrounded by a flat rim. Two rims of two such shaped sheets are connected to each other, thereby providing a shape of a flying saucer.

The filling may be a sherbet filling comprising one or more sugars, usually grinded sugars, like disaccharides, e.g. sucrose, lactose or maltose, monosaccharides, like dextrose, fructose or galactose, a powdery acid fit for consumption, like tartaric acid, and optionally additives like a colorant and/or an aroma. Once filled, the cavities are closed by a second sheet which has been conditioned. To cause the sheets to stick together, one of the sides which is to contact the other sheet, maybe wettened with water.

After having closed indentations of the first unleavened food sheet with either a flat unleavened food sheet or a second unleavened food sheet, the filled wafer may be cu from the composed sheets, in particularly in case more than one indentations are provided in one unleavened food sheet. This cutting may be e.g. die cutting.

It was found that the baked unleavened food sheet is preferably lasered using a pulsed laser beam, when the humidity in the baked unleavened food sheet is equal to or more than 1%w, such as equal to or more than 2%w, preferably equal to or above 5%w, even preferably equal to or above 8%w, even more than or equal to 10%w. A humidity in the baked unleavened food sheet equal or above this threshold, provides even more a guarantee that the etching by using a pulsed laser beam will avoid creation of overheated or burnt locations on the sheet, even though the sheet is typically quite thin. This allows the tuning and keeping the settings of the laser beam to be less critical, as compared to baked unleavened food sheet having not reached this humidity.

The conditioning as well as lasering may be done at several positions in the production process. The lasering may be done after the baking of the unleavened food sheet, however preferably once the unleavened food sheet is cooled. More preferred, the unleavened food sheet is first conditioned such it has a humidity sufficiently high. The unleavened food sheets may be lasered at one or at both sides. Hence the sequence of steps may be baking the unleavened food sheet, optionally conditioning the unleavened food sheet to bring the humidity at or above the value, lasering the unleavened food sheet, filling an indentation and closing the casing with another unleavened food sheet (the latter may be lasered as well) and cutting out the filled wafer. The lasering may be done immediately before the filling the indentations, when at least one shaped sheet is used and is combined with another shaper or a flat unleavened food sheet. Optionally or alternatively, the flat or the second shaped unleavened food sheet may be lasered and provided with a mark immediately before the closing of the case.

As a further alternative, the lasering may take place immediately before the cutting of the filled wafer from a composition of two unleavened food sheets adhering one to the other. Hence the sequence of steps may be baking the unleavened food sheet, optionally conditioning the unleavened food sheet to bring the humidity at or above the threshold value, filling an indentation and closing the casing with another unleavened food sheet, lasering the unleavened food sheet, and cutting out the filled wafer. Or alternatively the sequence of steps may be baking the unleavened food sheet, filling an indentation and closing the casing with another unleavened food sheet, optionally conditioning the unleavened food sheet to bring the humidity at or above the threshold value, lasering the unleavened food sheet, and cutting out the filled wafer.

As even another alternative, the filled wafers may be lasered after having been cut, like die cut to shape. Hence the sequence of steps may be baking the unleavened food sheet, optionally conditioning the unleavened food sheet to bring the humidity at or above the threshold value, filling an indentation and closing the casing with another unleavened food sheet, cutting out the filled wafer and lasering the unleavened food sheet. Or alternatively the sequence of steps may be baking the unleavened food sheet, filling an indentation and closing the casing with another unleavened food sheet, cutting out the filled wafer, optionally conditioning the unleavened food sheet to bring the humidity at or above the threshold value, and lasering the unleavened food sheet.

And in each case, preferably the unleavened food sheet, either already filled or not, is lasered, by the pulsed laser beam, when its humidity is controlled and kept above the threshold value and/or when the temperature of the unleavened food sheet is sufficiently low.

The laser used to etch the unleavened food sheet is preferably a pulsed laser. Possibly a pulsed laser may be applied with a pulse duration on the range of 2 to 1000 µseconds and/or a pulse frequency of 2 to 200 kHz. The pulsed laser may be used with a duty cycle of less than or equal to 60%, preferably less than or equal to 55%, such as in a range of 45% to 55%. As an example a pulsed laser with a duty cycle of 50% may be used. A pulsed laser may be applied with a maximum power of 350 W, preferably a maximum power of 275W. As an example a pulsed laser with a maximum power of 250W may be used.

The spot size of the laser during the laser etching may range from 250 µm to 750µm, more preferably from 500 µm to 550µm, e.g. 510µm, 520µm 530µm or 540µm. The laser may be focused on the surface of the unleavened food sheet.

The laser is preferably a CO2 pulsed laser, most preferably having its wavelength set in the range of about 9.3 µm to about 10.6 µm, and most preferred using a wavelength of 10.6µm.

According to a second aspect of the invention, a method to provide one or more marks to an unleavened food sheets is provided, the method comprises laser etching of said mark in a surface of unleavened food sheets, preferably using a pulsed laser.

According to some embodiments, the method may comprise tuning the humidity of said unleavened food sheets to a level of more than or equal to 1%w, even more than or equal to 2%w humidity, or higher, prior to laser etching of said mark in a surface of the unleavened food sheets.

According to some embodiments, the method may comprise bringing the temperature of said unleavened food sheets to less than or equal to 100°C, or lower, prior to laser etching of said mark in a surface of the unleavened food sheets.

The same features as set out for the method of providing at least one mark to a filled wafer comprising an unleavened food sheet casing according to the first aspect of the invention, may apply to the method to provide at least one mark to a filled wafer comprising an unleavened food sheet casing according to this second aspect of the invention.

According to a third aspect of the invention, a filled wafer is provided, the filled wafer comprising a casing of at least one unleavened food sheet, said casing encapsulating a filling, the outer surface of said at least one unleavened food sheet being provided with at least one mark by laser etching.

The laser used is preferably a pulsed laser, in order to avoid a clean mark without traces of burning the sheet.

Hence a filled wafer comprising a casing of at least one unleavened food sheet may be provided, the casing encapsulating a filling, the outer surface of the at least one unleavened food sheet is provided with at least one mark by laser etching and is free of signs of burning.

According to some embodiments, the filled wafer may comprise two unleavened food sheets, each providing a part of the casing, said two unleavened food sheets being connected one to the other thereby closing the casing, said mark is provided to the at least one unleavened food sheet prior to connected the two unleavened food sheets to each other.

According to some embodiments, the filled wafer may be obtainable by a method according to the first aspect of the invention.

According to some embodiments, the filled wafer is obtained by a method according to the first aspect of the invention.

Hence a filled wafer comprising a casing of at least one unleavened food sheet may be provided, the casing encapsulating a filling, the outer surface of this at least one unleavened food sheet being provided with at least one mark by laser etching using a pulsed laser.

According to some embodiments, the filled wafer may comprise a sherbet filling, optionally with added flavours like fruit or cola flavour.

According to a fourth aspect of the invention, a pulsed laser is used for etching at least one mark in a surface of an unleavened food sheet, this unleavened food sheet preferably be part of a filled wafer.

An or the aspects of one of the aspects of the present invention may be combined and used in combination with one, more or all features of any other aspect of the present invention.

### Brief Description of the Drawings

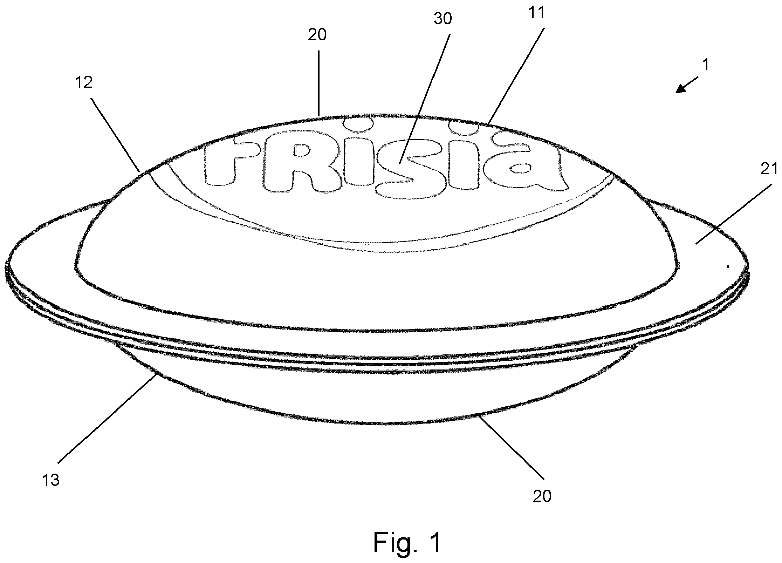

Fig. 1 illustrates schematically a flying saucer, provided with a lasered mark

### Detailed Description of Embodiment(s)

According to the present invention, a laser etched flying saucer 1, i.e. a filled wafer comprising an unleavened food sheet casing 11 being filled with sherbet filling is provided. The unleavened food sheet casing is provided by two parts 12, 13 of shaped unleavened food sheet, each having an indentation 20 having the shape of a spherical cap, surrounded by a flat rim 21. The rims of the two parts are connected to each other after filling of one of the indentations, at least partially, with sherbet filling, the latter comprising sugars, food acid, colorants and flavouring. An example of such flying saucer, provided with a lasered mark, is shown in figure 1. In this embodiment, one unleavened food sheet 12 is provided with a laser etched mark 30.

The unleavened food sheets are made from a batter, which is provided first. The batter comprises natural corn starch, water, vegetable oil and optionally some colorants. The weight ratio of starch to water is in the range of 0.7 to 1.0. Food grade oil is added in the range of 0 to 1 litre, more preferred in the range of 0.2 litre to 0.5 litre, per 100 litre water, and 50 to 100 gram curcumin per 100 litre water (yellow colorant). This mixture is thoroughly mixed to a batter of uniform colour and composition. It is understood that other colorants to obtain a yellow unleavened food sheet, or other colours to obtain any other colour for the unleavened food sheet may be added. Colorants may be omitted to obtain unleavened food sheets without added colour.

The batter is now provided to a double sided baking tray or baking iron. The baking tray has a male and female part. The female part has a number of spherical cap indentations on its surface, while the male part has the same number of protrusions, each protrusion having the shape of a spherical cap. The indentations and protrusions are positioned such that, upon closing the baking iron, in each indentation a protrusion is inserted. The batter is provided to the baking tray and the baking tray is closed. The batter flows between the male and female part of the baking tray, after which the baking tray is heated to a temperature in the range of 100°C *to* 150°C, during a period of 0.5 to 1.5 minutes.

A profiled baked unleavened food sheet is provided having a flat sheet with indentations where the protrusions and recesses were present during baking. The thickness of the sheet may be tuned by the amount of the batter being provided, and the relative positioning of the parts of the baking tray during baking. As an example, a sheet with a thickness in the range of 0.9mm to 1.1mm may be provided.

When the unleavened food sheet leaves the oven, the sheet is brittle, hot, e.g. having the temperature of the baking tray in the range of 120° to 150°C, and is dry, having a humidity which may be less than 2%w, even less than 1%w.

The freshly baked unleavened food sheet is now left exposed to the ambient. The temperature of the unleavened food sheet lowers as the unleavened food sheet cools due to the ambient air conditions. The water content of the unleavened food sheet also raises, as the dry unleavened food sheet takes humidity from the ambient air. This exposure brings the temperature down and raises the humidity of the unleavened food sheet such it is adapted to be lasered by a pulsed laser.

Alternatively, in order to prepare the unleavened food sheet for lasering, the unleavened food sheets are exposed to a conditioning step or steps, like exposing the unleavened food sheet during a relative short time, e.g. some seconds to some minutes, to saturated steam, exposing the unleavened food sheet to conditions of 70 to 90%RH and a temperature of 15°C to 50°C for at least 30 minutes, e.g. a time period between 30 minutes and 60 minutes, or exposing the unleavened food sheet to conditions of 15°C to 40°C, and a relative humidity of 55 to 75%RH, for a period of more than 30 minutes, e.g. 2h, or more. Alternatively, two of the above treatments are used one after the other. Such treatment or treatments raise the water content of the unleavened food sheet, to more than 1%w, even to 5%w or more, or over 10%w or more. The temperature of the unleavened food sheet will be less than 100°C, even less than 50°C. After such treatment the unleavened food sheet is adapted to be lasered by a pulsed laser.

The unleavened food sheets maybe lasered by using a pulsed CO2 laser with an average power of 200Watt to 300Watt, pulsing with pulses of 2 to 1000 µs and a pulse frequency of 2 to 200 µs. The laser is focused on the surface to be etched with a laser diameter at focus of about 500µm to 600µm. The convex side of the indentations are laser etched.

When the laser etching has taken place after exposing the freshly baked unleavened food sheets to the ambient, the above described conditioning steps may take place after the laser etching.

The unleavened food sheets, some or all being lasered, are now subjected to a filling and closing step. A first sheet and a second sheet is provided, at least one being laser etched. Sherbet filling is provided in the concave sides of the spherical caps of one of the unleavened food sheets. The surface of the rims at the concave side of one or both the unleavened food sheets is wettened, and the two unleavened food sheets are placed one on top of the other, with the surfaces at the concave sides of the spherical caps contacting. Due to the wetting, the two surfaced will stick one to the other. the flying saucers are now die cut from the two stacked sheets, by using a circular die cutting adjacent the spherical caps, thereby providing the two caps joined with a rim of about 1mm width.

According to an alternative method, the flying saucers are first made by the above mentioned steps, except that no lasering takes place. After providing the flying saucers, e.g. by die cutting them from two stacked unleavened food sheets, the flying saucers may be positioned on a support, such that the flying saucer is resting on a supporting plate or belt, the plate or belt being provided with circular apertures having a diameter of about the base radius of the spherical cap. The flying saucers are now positioned and may pass over and/or under a pulsed laser, which etches a mark in one or both sides of the flying saucer.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method to provide at least one mark to a filled wafer comprising an unleavened food sheet casing, said casing being provided from at least one unleavened food sheet, said casing encapsulating a filling, said method comprises using a pulsed laser for laser etching of at least one mark in at least one of said at least one unleavened food sheet.

2. A method according to claim 1, wherein the thickness of the unleavened food sheet ranges from 0.25mm to 2.5 mm.

3. A method according to any one of the preceding claims, wherein said method comprises tuning the humidity of said unleavened food sheet to a level of more than or equal to 1%w, prior to laser etching of said mark in said unleavened food sheet.

4. A method according to any one of the preceding claims, wherein said method comprises tuning the temperature of said unleavened food sheet to a level of less than or equal to 100°C, prior to laser etching of said mark in said unleavened food sheet.

5. A method according to any one of the preceding claims, wherein said mark is provided to the outer side of the at least one unleavened food sheet.

6. A method according to any one of the preceding claims, wherein said filled wafer comprises two unleavened food sheets, each providing a part of the casing, said two unleavened food sheets being connected one to the other thereby closing the casing, said at least one mark is provided to at least one of the two unleavened food sheets prior to connected the two unleavened food sheets to each other.

7. A method according to claim 6, wherein both unleavened food sheets are provided with a mark by laser etching.

8. A method according to any one of the claims 6 to 7, wherein said filling being sherbet filling.

9. A method according to any one of the claims 6 to 8, wherein said each of said two unleavened food sheets have a substantially flat rim, encompassing a spherical cap shaped concavity, said substantially flat rims being connected one to the other thereby closing the casing.

10. A method according to claim 9, wherein said connecting of the two unleavened food sheets comprises wetting at least one of said substantially flat rim with water, and contacting, optionally pressing the two substantially flat rims to each other.

11. A method according to any one of the preceding claims, wherein said pulsed laser is applied with a pulse duration on the range of 2 to 1000 µseconds and/or a pulse frequency of 2 to 200 kHz.

12. A method according to any one of the preceding claims, wherein said pulsed laser is applied with a maximum power of 350 W, preferably a maximum power of 275W.

13. A filled wafer comprising a casing of at least one unleavened food sheet, said casing encapsulating a filling, the outer surface of said at least one unleavened food sheet being provided with at least one mark by laser etching.

14. A filled wafer according to claim 13, said filled wafer comprising two unleavened food sheets, each providing a part of the casing, said two unleavened food sheets being connected one to the other thereby closing the casing, said mark is provided to the at least one unleavened food sheet prior to connected the two unleavened food sheets to each other.

15. A filled wafer according to any one of the claims 13 to 14, said filled wafer comprises a sherbet filling.

16. The use of a pulsed laser for etching at least one mark in a surface of an unleavened food sheet, this unleavened food sheet preferably be part of a filled wafer.
